# EUROPEAN PATENT SPECIFICATION

(11) **EP 1 791 492 B1**
(45) Date of publication and mention of the grant of the patent: **13.11.2013**
(21) Application number: 05772280.3
(22) Date of filing: 11.08.2005
(51) Int. Cl.: A61C 13/00, B23Q 3/06

(54) **METHOD FOR SUPPLYING A DENTAL PRODUCT**
VERFAHREN ZUR BEREITSTELLUNG EINES DENTALPRODUKTS
PROCEDE D'ACHEMINEMENT D'UN PRODUIT DENTAIRE

(30) Priority: 01.09.2004 SE 0402109
(43) Date of publication of application: 06.06.2007
(73) Proprietor: Nobel Biocare Services AG, 8058 Zürich-Flughafen (CH)
(72) Inventor: JOHANSSON, Ulf, SE-442 33 Kungälv (SE); SVENSSON, Glenn, SE-423 73 SÄVE (SE)
(74) Representative: Roman Ekstedt, Måns
(86) International application number: PCT/SE2005/001200
(87) International publication number: WO 2006/025776

(56) References cited:
- WO-A-02/45614
- US-A1- 2002 125 619
- US-A1- 2003 132 539
- US-A1- 2004 072 121

## Description

The present invention relates to a method for supplying a product which is intended for production of a dental prosthesis and which is configured with a silhouetted, unsintered or presintered first unit of ceramic material and a second unit retaining the latter via securing parts.

In the production of dental products made of ceramic material, it is known to make the product in question from an unsintered or presintered material (raw material, blank). The material in the unsintered or presintered state is relatively fragile and therefore difficult to transport, handle and machine. The material is additionally quite expensive, which means that damage to components has to be avoided.

Various measures have therefore been proposed to facilitate the handling and machining of the material in question, and in this connection reference may be made, inter alia, to WO 02/45614 which has proposed a holding arrangement for the material during the machining.

Further, US 2002/0125619 A1 (Bodenmiller et al.) discloses that for the manufacture of shaped parts from ceramics, for example for dental-technical purposes, first of all a powdery ceramic raw material is compressed to form a ceramic green compact. The inner contour and/or the outer contour of the shaped parts is then prepared by machining the ceramic green compact by means of eroding methods, with the ceramic green compact being embedded into a workpiece receiver before the machining by means of an embedding mass which supposedly neither damages nor reacts chemically with the ceramic green compact. Subsequently, the machined ceramic green compact is sintered to form a highstrength ceramic shaped part. A ceramic material which is almost shrinkage-free during sintering is preferably used.

There is, however, a need for methods and arrangements which further reduce the risks of damage during normal handling and permit savings in terms of the expensive material, which in turn simplifies the production procedure as such and reduces the costs. There is also a need for the production process for the dental products, e.g. dental bridges, individual teeth, etc., to be made more efficient. Advantageous production installations must be able to be set up, for example by being able to avoid costly robotic charging. The object of the present invention is to solve all or some of these problems.

The feature which can principally be regarded as characterizing a method according to the invention is, inter alia, that the ceramic material is enclosed and anchored by means of joining material, preferably glue, via its outer surface to an inner surface of material completely or partially surrounding the ceramic material, and that at the transition between the materials a silhouetting process, preferably milling, is carried out from two opposite directions. The invention is additionally characterized in that, in the silhouetting process, outer and inner silhouettes facing one another are formed on the ceramic and surrounding materials, respectively, and, left extending between the inner and outer silhouettes, there are securing sections which consist of the ceramic, surrounding and joining materials, said first unit being formed by the ceramic material provided with external silhouette, said second unit being formed by the surrounding material provided with internal silhouette, and said securing parts being formed by the securing sections.

In a preferred embodiment, the second unit is a tubular unit. The second unit is preferably made of aluminum, dimensionally stable plastic material, or equivalent material which is relatively, inexpensive compared to the ceramic material. The first unit is attached to the inner surface of the second unit by means of glue or an adhesive connection, and the ceramic material can preferably be zirconium oxide. The ceramic material can be arranged in short tubes which can be assigned to dental bridges, individual teeth, etc., or in longer tubes in which one or more ceramic material rods are adhesively bonded. The first unit is preferably assigned a cylindrical shape.

By means of what has been proposed above, the ceramic blank or the material can be produced by isostatic pressing. To obtain blanks which are as homogeneous and gradient-free as possible, the blanks are assigned a cylindrical shape. The blank or the material can be adhesively bonded into a tubular holder which is made of a stiff and durable material that is easy to machine. During the machining, especially milling, of the dental products in question, so-called silhouette milling can be applied. By virtue of the arrangement, the silhouetted ceramic material can be provided with a holding part or frame of less expensive material. By means of the proposed tube method, the tube, together with the glue that holds the blank firmly in the tube, can form said frame after and during the machining. The blank in the frame can be made of plastic or aluminum which is considerably less expensive than the chosen ceramic material, and this in itself constitutes a substantial cost saving. By means of the invention it is also possible to provide short tubes for a bridge, or long tubes with one or more zirconium oxide rods adhesively bonded in them. The long tubes then afford the great advantage that the advancing mechanism known in today's machining devices can be used, which means that, for example, it is possible to eliminate manual assembly of the ceramic blank or the material. In this way, highly efficient production installations can be set up without components having to be handled by means of costly robotic charging.

A presently proposed embodiment of the method according to the invention will be described below with reference to the attached drawings, in which:
- Figure 1: shows, in a horizontal view, silhouetting carried out on a tubular part with a ceramic blank placed inside it,
- Figure 2: is a cross section showing the tube and the ceramic material lying inside it, and a silhouetting function which can be effected from two opposite directions,
- Figure 3: shows, in longitudinal section, the tube and the ceramic blank according to Figure 1, and
- Figure 4: shows a perspective view, obliquely from above, of an advancing mechanism for a tube with ceramic material lying inside it, arranged on a CAD appliance, part of which is shown.

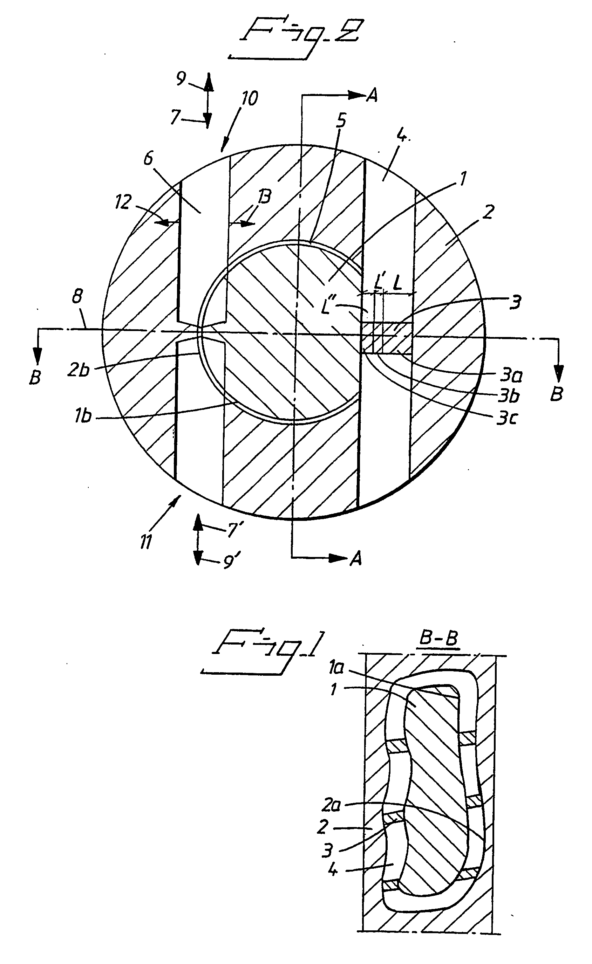

In Figure 1, a first unit made of ceramic material is indicated by 1. A second unit surrounding the first part is indicated by 2. Said first and second units are joined by securing parts 3 which extend from the first unit outward to the second unit. The ceramic material can consist of zirconium oxide and the second part can be made of aluminum, dimensionally stable plastic, or another material which is less expensive than the ceramic material. Both the material of the first unit and that of the second unit has been subjected to silhouetting, resulting in the first unit having an outer silhouette 1a and the second unit having an inner silhouette 2a. The silhouetting can be performed by milling from two opposite directions. One direction is a direction substantially perpendicular to the plane of the figure in Figure 1, while the other direction is a direction extending from under the view shown in Figure 1 and upward at right angles to the plane of the figure. The silhouetting has here been carried out such that said securing parts 3 have been left. The silhouetting depends on the shape which the ceramic material is to be given, and, similarly, the number and formation of the securing parts 3 depend on the securing wanted for the first unit 1 with respect to the second unit 2. The actual silhouetting is indicated by 4 in Figure 1.

In accordance with Figure 2, the second unit is tubular. In the cross section shown in Figure 2, the first unit in the initial stage has the shape of a cylindrical rod or part which extends at right angles to the plane of the figure in Figure 2. The tube and the cylindrical part (i.e. the first unit) are joined to one another by a layer of glue 5. The layer of glue thus connects the outer surface 1b of the first part and the inner surface 2b of the tube. The figure shows a member which effects the silhouetting and which, in the present illustrative embodiment, is in the form of milling equipment known per se. The part 6 of the milling tool carrying out the milling is fed in two opposite directions during the silhouetting. In a first stage, said actuating part 6 is driven in the material of the tube and of the first unit in a first direction which is indicated by a directional arrow 7. The actuating part is driven down to the center line 8 which is substantially at right angles to said direction of movement 7, which direction of movement coincides with the plane of the figure in Figure 2. When the upper half of the tube and of the cylindrical part has thus been milled, the actuating part 6 is moved in a direction of withdrawal which is indicated by 9. Said first milling direction is symbolized by 10 in Figure 2. The second half of the milling or silhouetting takes place from an opposite direction which is symbolized by 11 in the figure. The directions of movement are in this case indicated by arrows 7' and 9'. Said opposite directions are at substantially 180° to one another. The milling from underneath takes place in a corresponding manner up to the diameter line 8 in Figure 2. The milling function results in what in principle is a continuous silhouette groove 4, except for the securing parts 3 which are left during the silhouetting or milling. In an alternative embodiment, only one direction 10 or 11 is used, in which case the first and second units are turned 180° about their longitudinal axis between the two milling steps. According to the invention, the milling is performed at the transition between the first and second units and said layer of glue 5. Depending on the extent of the silhouetting, the securing parts 3 will be made of different material compositions. Preferably, most or all of the securing parts 3 are formed from the material of the tube shape and of the layer of glue 5. Alternately, a certain length can consist of the material of the first unit. Lengths L, L' and L'' have been indicated in Figure 2, and it is advantageous here that the distances L and L' take up the greater part of the length of the securing part, for example at least 90° of the part. In Figure 2, the milling needle directions have been indicated in relation to the first and second material and the layer of glue and, during silhouetting, the milling tool is moved in the directions of the arrows 12 and 13 so that the curved silhouette 1a (see Figure 1) is obtained.

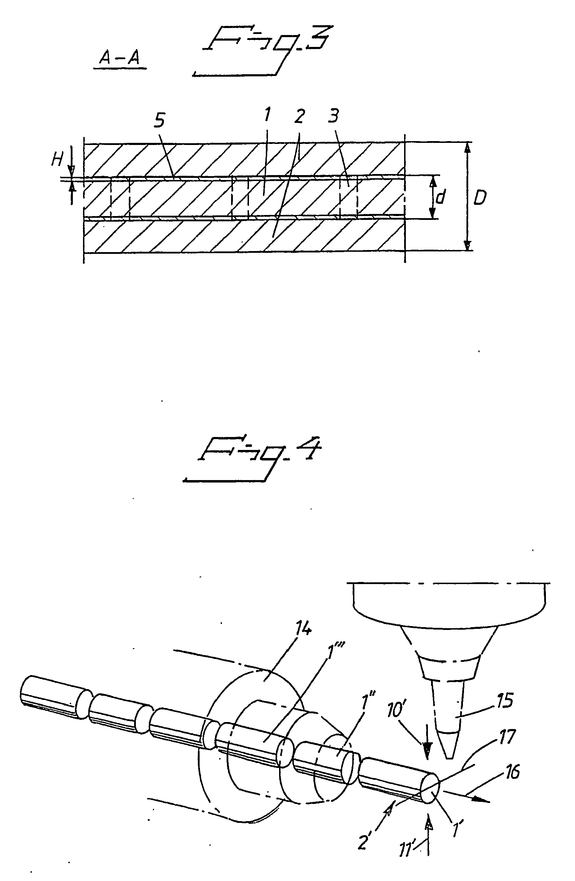

In Figure 3, the thickness of the layer of glue is indicated by H. The thickness can be chosen between 0.5 and 1 mm. The external and internal diameters D and d, respectively, of the tube are chosen as a function of the strength which is to be obtained for the rod or rod part in its entirety. The dimensions of the cylindrical part 1 are also chosen in relation to the product which is to be handled and machined. The glue can be a conventional glue or, alternately, a curable polymer.

In accordance with Figure 4, the tube 2' in question can be advanced in an advancing device 14 known per se, which can form part of a CAD appliance. The tube 2' can comprise a number of cylindrical first units 1', 1'', 1''', etc. Alternately, said first units can form a common cylinder-shaped unit which can be divided in a manner known per se in cutting equipment (not shown specifically). In Figure 4, a milling drill is indicated by 15. The second unit, with the first unit or units inside it, is advanced in the direction 16 and the milling is carried out with the milling tool 15 in both directions 10' and 11' (cf. above). The tube is thus turned 180° in relation to the dividing line 17 during the silhouetting. Less ceramic material is used up, and the securing parts are stronger since the ceramic material itself does not have to form the securing parts, and the securing parts to a large extent can comprise the materials in the second unit and the glue connection.

## Claims

1. A method for supplying a product which is intended for production of a dental prosthesis and which is configured with a silhouetted, unsintered or presintered first unit (1) of ceramic material, and a second unit (2) securing the first unit (1) via securing parts (3), **characterized in that** the ceramic material is enclosed and anchored by means of joining material (5), preferably glue, via its outer surface to an inner surface of material completely or partially surrounding the ceramic material (1), wherein at the transition between the materials a silhouetting process, preferably milling, is carried out from two opposite directions, wherein in the silhouetting process outer and inner silhouettes facing one another are formed on the ceramic and surrounding material, respectively, and, left extending between the inner and outer silhouettes (1a, 2a), there are securing sections which consist of the ceramic, surrounding and joining materials, and **in that** said first unit is formed by the ceramic material provided with external silhouette, said second unit is formed by the surrounding material provided with internal silhouette, and said securing parts (3) are formed by the securing sections.

2. The method as claimed in patent claim 1, **characterized in that** the second unit (2) is tubular.

3. The method as claimed in patent claim 2, **characterized in that** the second unit (2) is made of aluminum or dimensionally stable plastic material.

4. The method as claimed in patent claim 2 or 3,
**characterized in that** the first unit is secured to the inner surface (2b) of the second unit by means of glue or an adhesive joint.

5. The method as claimed in patent claim 1, 2 or 3, **characterized in that** the ceramic material is zirconium oxide.

6. The method as claimed in any of the preceding patent claims, **characterized in that** the ceramic material is arranged in short tubes which can be assigned to dental bridges or in longer tubes in which one or more ceramic material rods, e.g. zirconium oxide rods, are adhesively bonded.

7. The method as claimed in any one of the preceding patent claims, **characterized in that** the first unit is assigned a cylindrical tubular shape.

## Patentansprüche

1. Verfahren zur Bereitstellung eines Produkts, das zur Herstellung einer Zahnprothese bestimmt ist und das mit einer umrissenen, nicht gesinterten oder vorgesinterten ersten Einheit (1) aus keramischem Material und einer zweiten Einheit (2), die die erste Einheit (1) durch Sicherungsteile (3) sichert, eingerichtet ist, das **dadurch gekennzeichnet ist, dass** das keramische Material von Verbindungsmaterial (5), bevorzugt Klebstoff, umschlossen und über seine äußere Oberfläche an einer inneren Oberfläche aus Material, die ganz oder teilweise das keramische Material (1) umgibt, verankert ist, wobei am Übergang zwischen den Materialien ein umrisserzeugendes Verfahren, bevorzugt Fräsen, aus zwei gegenüberliegenden Richtung durchgeführt wird, wobei im umrisserzeugenden Verfahren äußere und innere Umrisse, die einander zugewandt sind, jeweils auf der Keramik und umgebendem Material gebildet werden, sich Sicherungsabschnitte, die aus den keramischen, umgebenden und Verbindungsmaterialen bestehen, übrig geblieben zwischen den inneren und äußeren Umrissen (1a, 2a) erstrecken, und dadurch, dass die erste Einheit durch das keramische Material mit äußerem Umriss gebildet ist, die zweite Einheit durch das umgebende Material mit innerem Umriss gebildet ist und die Sicherungsteile (3) durch die Sicherungsabschnitte gebildet sind.

2. Verfahren wie in Patentanspruch 1 beansprucht, **dadurch gekennzeichnet, dass** die zweite Einheit (2) röhrenförmig ist.

3. Verfahren wie in Patentanspruch 2 beansprucht, **dadurch gekennzeichnet, dass** die zweite Einheit (2) aus Aluminium oder räumlich stabilem Kunststoff hergestellt ist.

4. Verfahren wie in Patentanspruch 2 oder 3 beansprucht, **dadurch gekennzeichnet, dass** die erste Einheit durch Klebstoff oder eine Klebeverbindung an der inneren Oberfläche (2b) der zweiten Einheit befestigt ist.

5. Verfahren wie in Patentanspruch 1, 2 oder 3 beansprucht, **dadurch gekennzeichnet, dass** das keramische Material Zirconiumoxid ist.

6. Verfahren wie in einem der vorhergehenden Patentansprüche beansprucht, **dadurch gekennzeichnet, dass** das keramische Material in kurzen Röhren, die Zahnbrücken zugeordnet werden können, oder in längeren Röhren angeordnet ist, in die einer oder mehrere Stäbe aus keramischem Material, z.B. Stäbe aus Zirconiumoxid, geklebt sind.

7. Verfahren wie in einem der vorhergehenden Patentansprüche beansprucht, **dadurch gekennzeichnet, dass** der ersten Einheit eine zylindrische röhrenförmige Form zugeordnet ist.

## Revendications

1. Procédé permettant de fournir un produit qui est destiné à la production d'une prothèse dentaire et qui est configuré avec une première unité à contour, non frittée ou préfrittée (1) de matériau céramique, et une deuxième unité (2) fixant la première unité (1) par l'intermédiaire de parties de fixation (3), **caractérisé en ce que** le matériau céramique est enveloppé et ancré au moyen de matériau de jonction (5), de préférence de la colle, par l'intermédiaire de sa surface extérieure à une surface intérieure d'un matériau complètement ou partiellement environnant le matériau céramique (1), où, au niveau de la transition entre les matériaux, un processus de création de contour, de préférence de fraisage, est effectué à partir de deux directions opposées, où, au cours du processus de création de contour, des contours extérieur et intérieur se faisant face sont formés sur le matériau céramique et environnant, respectivement, et, s'étendant à gauche entre les contours intérieur et extérieur (1a, 2a), il existe des sections de fixation qui sont constituées des matériaux céramique, environnant, et de jonction, et **en ce que** ladite première unité est formée par le matériau céramique muni de contour extérieur, ladite deuxième unité est formée par le matériau environnant muni de contour intérieur, et lesdites parties de fixation (3) sont formées par les sections de fixation.

2. Procédé tel que revendiqué dans la revendication 1, **caractérisé en ce que** la deuxième unité (2) est tubulaire.

3. Procédé tel que revendiqué dans la revendication 2, **caractérisé en ce que** la deuxième unité (2) est réalisée en aluminium ou en matière plastique dimensionnellement stable.

4. Procédé tel que revendiqué dans la revendication 2 ou 3, **caractérisé en ce que** la première unité est fixée à la surface intérieure (2b) de la deuxième unité au moyen de colle ou d'un joint adhésif.

5. Procédé tel que revendiqué dans la revendication 1, 2 ou 3, **caractérisé en ce que** le matériau céramique est l'oxyde de zirconium.

6. Procédé tel que revendiqué dans l'une des revendications précédentes, **caractérisé en ce que** le matériau céramique est disposé en des tubes courts qui peuvent être attribués à des ponts dentaires ou en des tubes plus longs où une ou plusieurs tige(s) de matériau céramique, par exemple, des tiges d'oxyde de zirconium, sont liées de manière adhésive.

7. Procédé tel que revendiqué dans l'une quelconque des revendications précédentes, **caractérisé en ce que** la première unité présente une forme tubulaire cylindrique.
